# EUROPEAN PATENT SPECIFICATION

(11) **EP 3 242 505 B1**
(45) Date of publication and mention of the grant of the patent: **10.04.2019**
(21) Application number: 14909419.5
(22) Date of filing: 30.12.2014
(51) Int. Cl.: H04W 16/18

(54) **COMMUNICATION METHOD, DEVICE AND SYSTEM**
KOMMUNIKATIONSVERFAHREN, -VORRICHTUNG UND -SYSTEM
PROCÉDÉ, DISPOSITIF ET SYSTÈME DE COMMUNICATION

(43) Date of publication of application: 08.11.2017
(73) Proprietor: Huawei Technologies Co., Ltd., Longgang District Shenzhen, Guangdong 518129 (CN)
(72) Inventor: ZHOU, Jian, Shenzhen Guangdong 518129 (CN); DONG, Jiushan, Shenzhen Guangdong 518129 (CN); LUO, Tong, Shenzhen Guangdong 518129 (CN)
(74) Representative: Epping - Hermann - Fischer
(86) International application number: PCT/CN2014/095688
(87) International publication number: WO 2016/106609

(56) References cited:
- WO-A1-2014/126445
- CN-A- 102 118 762
- CN-A- 102 324 958
- CN-A- 102 970 067
- CN-A- 102 970 067
- YU-TING HSUEH ET AL: "A novel wireless over fiber access architecture employing moving chain cells and RoF technique for broadband wireless applications on the train environment", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946702, ISBN: 978-1-4577-0213-6
- YISHENG ZHAO ET AL: "Spring model-based call admission control mechanism for high-speed railway environment", COMMUNICATIONS AND NETWORKING IN CHINA (CHINACOM), 2011 6TH INTERNATIONAL ICST CONFERENCE ON, IEEE, 17 August 2011 (2011-08-17), pages 1196-1200, XP032120091, DOI: 10.1109/CHINACOM.2011.6158339 ISBN: 978-1-4577-0100-9
- HSUEH, Y.T. ET AL.: 'A Novel Wireless over Fiber Access Architecture Employing Moving Chain Cells and RoF Technique for Broadband Wireless Applications on the Train Environment' OSA/OFC/NFOEC 10 March 2011, pages 1 - 3, XP031946702

## Description

### TECHNICAL FIELD

The present invention relates to the communications field, and in particular, to a communications method, device, and system that provide a wireless communications service for a terminal that moves linearly.

### BACKGROUND

With development of wireless communications technologies, a user has a higher requirement for obtaining a good wireless service anytime and anywhere. However, as a speed of vehicles, such as a high-speed train, is greatly improved, how to provide good wireless communication quality for users on these vehicles has become increasingly important.

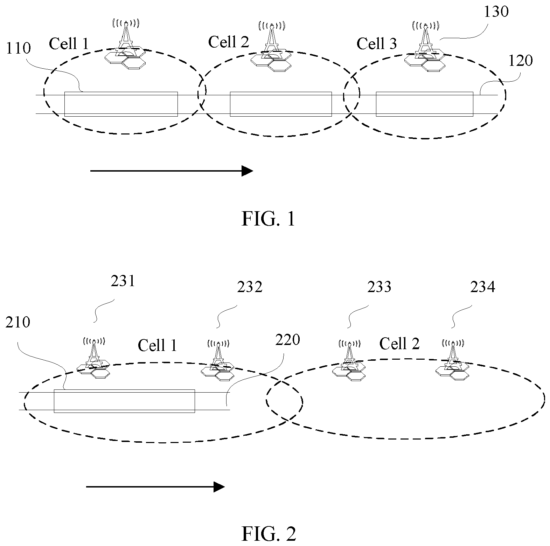

Referring to FIG. 1, FIG. 1 is a schematic diagram of an existing communications system that provides a wireless service for a user on a train. As shown in FIG. 1, a train 110 moves along a railway 120 in a direction shown by an arrow. Multiple radio frequency apparatuses 130 are disposed along the railway 120 so as to provide wireless network coverage along the railway 120. For simplicity, the diagram shows only three cells, Cell 1 to Cell 3, and there may be more cells in reality. In a moving process, the train 110 sequentially passes through Cell 1 to Cell 3, and a terminal of a user on the train 110 is handed over between cells, for example, is handed over from Cell 1 to Cell 2, and then is handed over from Cell 2 to Cell 3. As a speed of the train increases, a handover frequency is much higher. In addition, generally there is a large quantity of users on a train, and therefore, a large quantity of frequent handovers seriously affect performance of the communications system, and degrade communication quality, thereby causing user experience to be decreased.

CN 102 118 762 A discloses a one-way coverage scheme of a wireless communication network for a high-speed railway. A mode combining base band units (BBUs) and radio remote units (RRUs) is adopted; the BBUs and RRUs are arranged along the high-speed railway in a linear coverage manner; one BBU corresponds to a logic cell, is connected with multiple RRUs through optical fibers and covers the logic cell by use of the RRUs; and the RRU in each logic cell adopts one-way coverage, i.e. the RRU transmits signals toward one direction and the transmission direction is consistent.

WO 2014/126445 A1 discloses a method for and apparatus for performing data transmission in a wireless communication system. A wireless device checks a configuration including virtual cell groups, the virtual cell group each including two more serving cells which are shared an identical virtual cell identification (ID), checks discovery signals scrambled with the identical virtual cell ID and system information including a physical random access channel (PRACH) configuration, from master cells each of the virtual cell groups. Thus, the UE performs data transmission seamlessly because serving cells are belonged to the identical virtual cell ID even if a serving cell is switched from one to another in view of a physical cell.

CN 102 970 067 A discloses a method for achieving continuous broadband communication. In an improved communication scheme of a high-speed railway, firstly the network architecture is improved, a virtual single-cell topological structure is provided, a base station selects suitable radio remote units (RRUs) to serve user terminals by the aid of position information of the RRUs, when the base station selects a plurality of RRUs to serve the user terminals, the joint beamforming pre-processing is performed on signals to be sent according to channel state information between the plurality of RRUs and the user terminals.

### SUMMARY

Embodiments of the present invention provide a communications method, device, and system, which are used to provide a good wireless communications service for a terminal that moves linearly.

The invention is defined by the independent claims. Advantageous embodiments of the invention are given in the dependent claims. To achieve the foregoing objective, the following technical solutions are adopted in the following exemplary aspects: According to a first aspect, a communications device is provided, where the device is configured to provide a wireless communications service for a terminal cluster that moves linearly, and the device includes:
a baseband apparatus, configured to provide an unchanged cell for the terminal cluster in a linear movement process; and
multiple radio frequency apparatuses, which are separately connected to the baseband apparatus, disposed on a linear movement route of the terminal cluster, and provide wireless network linear coverage for the terminal cluster, where when the terminal cluster moves to a coverage area of each radio frequency apparatus, each radio frequency apparatus is configured to:
send uplink data of the terminal cluster to the baseband apparatus, so that the baseband apparatus processes, by using a baseband resource of the cell, the uplink data that is of the terminal cluster and sent by each radio frequency apparatus; or
receive downlink data that is for the terminal cluster and obtained by performing processing by the baseband apparatus by using a baseband resource of the cell, and send the downlink data to the terminal cluster.

With reference to the first aspect, in a first possible implementation, a part of the multiple radio frequency apparatuses provide wireless coverage that can cover the terminal cluster and that is of the cell, where the part of radio frequency apparatuses are referred to as a radio frequency apparatus group, and composition of the radio frequency apparatus group dynamically changes, so that a position of the provided wireless coverage of the cell dynamically changes as the terminal cluster moves linearly.

With reference to the first possible implementation of the first aspect, in a second possible implementation, a quantity of radio frequency apparatuses in the radio frequency apparatus group is N, and 1≤N≤M, where M is less than a quantity of the radio frequency apparatuses, M is determined according to a baseband processing capability of a single cell, and both N and M are integers.

With reference to the first possible implementation or the second possible implementation of the first aspect, in a third possible implementation, a quantity of the radio frequency apparatus groups is fixed or dynamically changes.

With reference to any one of the first possible implementation to the third possible implementation of the first aspect, in a fourth possible implementation, the baseband apparatus is further configured to control the composition of the radio frequency apparatus group.

With reference to the fourth possible implementation of the first aspect, in a fifth possible implementation, the baseband apparatus controls the composition of the radio frequency apparatus group according to movement information and position information of the terminal cluster.

With reference to the fifth possible implementation of the first aspect, in a sixth possible implementation, the baseband apparatus is configured to execute the following operations so as to control the composition of the radio frequency apparatus group:
obtaining the movement information of the terminal cluster and position information of the terminal cluster within a current time period;
determining, according to the movement information and the position information within the current time period, at least one radio frequency apparatus that can cover the terminal cluster within a next time period, where the at least one radio frequency apparatus constitutes the radio frequency apparatus group; and
controlling the radio frequency apparatus in the radio frequency apparatus group to be in an active state within the next time period.

With reference to the sixth possible implementation of the first aspect, in a seventh possible implementation, the baseband apparatus obtains the position information of the terminal cluster within the current time period in the following manner:
receiving the position information that is of the terminal cluster within the current time period and sent by a core network device; or
receiving the position information that is of the terminal cluster within the current time period and sent by a terminal in the terminal cluster; or
receiving uplink signal measurement information sent by a radio frequency apparatus in the active state at different moments, and obtaining the position information of the terminal cluster within the current time period according to the uplink signal measurement information sent at different moments.

With reference to the sixth possible implementation or the seventh possible implementation of the first aspect, in an eighth possible implementation, the baseband apparatus determines the at least one radio frequency apparatus that can cover the terminal cluster within the next time period, in the following manner:
determining, according to the movement information and the position information within the current time period, a range in which the terminal cluster is located within the next time period; and
determining, from the multiple radio frequency apparatuses according to a position and a coverage area of each radio frequency apparatus of the multiple radio frequency apparatuses, the at least one radio frequency apparatus whose total coverage area includes the range in which the terminal cluster is located within the next time period.

With reference to any one of the sixth possible implementation to the eighth possible implementation of the first aspect, in a ninth possible implementation, the baseband apparatus controls, in the following manner, the radio frequency apparatus in the radio frequency apparatus group to be in the active state within the next time period:
activating a radio frequency apparatus that is in the radio frequency apparatus group and in an inactive state.

With reference to any one of the sixth possible implementation to the ninth possible implementation of the first aspect, in a tenth possible implementation, the baseband apparatus is further configured to:
deactivate a radio frequency apparatus that is in a linear movement direction of the terminal cluster, outside the range in which the terminal cluster is located, and in an active state. With reference to the first aspect, or any one of the first possible implementation to the tenth possible implementation of the first aspect, in an eleventh possible implementation, the terminal cluster is a terminal cluster located on a train.

With reference to the eleventh possible implementation of the first aspect, in a twelfth possible implementation, a linear movement range of the terminal cluster is between two stations. According to a second aspect, a communications system is provided, including:
a first terminal cluster that moves linearly; and
any first communications device that is provided in the foregoing first aspect and configured to provide a wireless communications service for the first terminal cluster.

With reference to the second aspect, in a first possible implementation, the communications system further includes:
a second terminal cluster that moves linearly, where a movement direction of the second terminal cluster is opposite to that of the first terminal cluster; and
any second communications device that is provided in the foregoing first aspect and configured to provide a wireless communications service for the second terminal cluster, where a frequency of a cell corresponding to the first terminal cluster is different from a frequency of a cell corresponding to the second terminal cluster.

With reference to the first possible implementation of the second aspect, in a second possible implementation, the first communications device and the second communications device are a same device or different devices.

According to a third aspect, a communications method is provided, where the method is executed by a communications device, where the device is configured to provide a wireless communications service for a terminal cluster that moves linearly, and the device includes: a baseband apparatus, configured to provide an unchanged cell for the terminal cluster; and multiple radio frequency apparatuses, which are separately connected to the baseband apparatus, disposed on a linear movement route of the terminal cluster, and provide wireless network linear coverage for the terminal cluster; and the method includes:
when the terminal cluster moves to a coverage area of each radio frequency apparatus, sending, by each radio frequency apparatus, uplink data of the terminal cluster to the baseband apparatus, so that the baseband apparatus processes, by using a baseband resource of the cell, the uplink data that is of the terminal cluster and sent by each radio frequency apparatus; or receiving downlink data that is for the terminal cluster and obtained by performing processing by the baseband apparatus by using a baseband resource of the cell, and sending the data to the terminal cluster.

With reference to the third aspect, in a first possible implementation, a part of the multiple radio frequency apparatuses provide wireless coverage that can cover the terminal cluster and that is of the cell, where the part of radio frequency apparatuses are referred to as a radio frequency apparatus group, and composition of the radio frequency apparatus group dynamically changes, so that a position of the provided wireless coverage of the cell dynamically changes as the terminal cluster moves linearly.

With reference to the first possible implementation of the third aspect, in a second possible implementation, a quantity of radio frequency apparatuses in the radio frequency apparatus group is N, and 1≤N≤M, where M is less than a quantity of the radio frequency apparatuses, M is determined according to a baseband processing capability of a single cell, and both N and M are integers.

With reference to the first possible implementation or the second possible implementation of the third aspect, in a third possible implementation, a quantity of the radio frequency apparatus groups is fixed or dynamically changes.

With reference to any one of the first possible implementation to the third possible implementation of the third aspect, in a fourth possible implementation, the method further includes:
controlling, by the baseband apparatus, the composition of the radio frequency apparatus group.

With reference to the fourth possible implementation of the third aspect, in a fifth possible implementation, the controlling, by the baseband apparatus, the composition of the radio frequency apparatus group includes:
obtaining movement information of the terminal cluster and position information of the terminal cluster within a current time period;
determining, according to the movement information and the position information within the current time period, at least one radio frequency apparatus that can cover the terminal cluster within a next time period, where the at least one radio frequency apparatus constitutes the radio frequency apparatus group; and
controlling the radio frequency apparatus in the radio frequency apparatus group to be in an active state within the next time period.

With reference to the fifth possible implementation of the third aspect, in a sixth possible implementation, the baseband apparatus obtains the position information of the terminal cluster within the current time period in the following manner:
receiving the position information that is of the terminal cluster within the current time period and sent by a core network device; or
receiving the position information that is of the terminal cluster within the current time period and sent by a terminal in the terminal cluster; or
receiving uplink signal measurement information sent by a radio frequency apparatus in the active state at different moments, and obtaining the position information of the terminal cluster within the current time period according to the uplink signal measurement information sent at different moments.

With reference to the fifth possible implementation or the sixth possible implementation of the third aspect, in an seventh possible implementation, the baseband apparatus determines the at least one radio frequency apparatus that can cover the terminal cluster within the next time period, in the following manner:
determining, according to the movement information and the position information within the current time period, a range in which the terminal cluster is located within the next time period; and
determining, from the multiple radio frequency apparatuses, according to a position and a coverage area of each radio frequency apparatus of the multiple radio frequency apparatuses, the at least one radio frequency apparatus whose total coverage area includes the range in which the terminal cluster is located within the next time period.

With reference to any one of the fifth possible implementation to the seventh possible implementation of the third aspect, in a eighth possible implementation, the baseband apparatus controls, in the following manner, the radio frequency apparatus in the radio frequency apparatus group to be in the active state within the next time period:
activating a radio frequency apparatus that is in the radio frequency apparatus group and in an inactive state.

With reference to any one of the fifth possible implementation to the eighth possible implementation of the third aspect, in a ninth possible implementation, the method further includes:
deactivating, by the baseband apparatus, a radio frequency apparatus that is in a linear movement direction of the terminal cluster, outside the range in which the terminal cluster is located, and in an active state.

With reference to the third aspect, or any one of the first possible implementation to the ninth possible implementation of the third aspect, in an tenth possible implementation, the terminal cluster is a terminal cluster located on a train.

With reference to the tenth possible implementation of the third aspect, in a eleventh possible implementation, a linear movement range of the terminal cluster is between two stations.

In technical solutions provided in the embodiments of the present invention, an unchanged logical cell is provided for a terminal in a linear movement process, and a radio frequency apparatus that provides wireless network coverage is dynamically switched, so as to change a range of a physical cell corresponding to the logical cell, so that the physical cell moves as the terminal moves, and the logical cell does not change. Therefore, in a high-speed moving process, the terminal may no longer be handed over, thereby greatly improving performance and communication quality of a communications system, and providing better user experience.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an existing communications system that provides a wireless service for a user on a train;
FIG. 2 is a schematic diagram of an example of a communications system that provides a wireless service for a user on a train;
FIG. 3 is a schematic diagram of an example of a communications system that provides a wireless service for a user on a train according to an embodiment of the present invention;
FIG. 4 is a schematic diagram of a communications device according to an embodiment of the present invention;
FIG. 5 is a schematic flowchart of a method for controlling composition of a radio frequency apparatus group by a baseband apparatus according to an embodiment of the present invention; and
FIG. 6 is a schematic flowchart of a method for determining a radio frequency apparatus group by a baseband apparatus according to movement information and position information within a current time period according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. First, some terms in the present application are described, so as to facilitate understanding by a person skilled in the art.
(1) Linear movement is a type of non-random movement, and a direction of movement may be predicted. For example, a train moves along a railway, and a movement direction of the train may be predicted. Therefore, movement of a terminal of a user on the train is the linear movement when the train is in a moving process. For another example, an airplane moves along a course, and a movement direction of the airplane may also be predicted. Therefore, movement of a terminal of a user on the airplane is the linear movement when the airplane is in a moving process. In short, the linear movement refers to movement whose direction may be predicted.
(2) Linear coverage refers to wireless network coverage provided for a terminal that moves linearly. For example, a movement direction of a vehicle is generally unidirectional, and a scenario in which wireless network coverage is provided for the vehicle is a linear coverage scenario, such as a railway scenario, a highway scenario, an airplane-course scenario, or a seaway scenario.
   A linear movement route may include a railway, a highway, a course, a seaway, and the like.
   A vehicle may include a train, a car, an airplane, a ship, and the like.
(3) A base station may be a device that communicates with a wireless terminal over an air interface in an access network by using one or more sectors. For example, the base station may be a base station (also referred to as a base transceiver station, Base Transceiver Station, BTS) in a Global System for Mobile Communications (Global System for Mobile Communication, GSM) or a Code Division Multiple Access (Code Division Multiple Access, CDMA) system, or may be a base station (also referred to as a NodeB, NodeB) in a Wideband CDMA (Wideband CDMA, WCDMA) or Universal Mobile Telecommunications System (Universal Mobile Telecommunications System, UMTS), or may be a base station (also referred to as an evolved NodeB, evolutional Node B, eNB, or e-NodeB) in a Long Term Evolution (Long Term Evolution, LTE) system, or in addition, may be a WiMAX-BTS in Worldwide Interoperability for Microwave Access (World interoperability for Microwave Access, WiMAX), and the present invention sets no limitation.
(4) A terminal is also referred to as user equipment (User Equipment, UE), and may be referred to a device that provides voice and/or data connectivity for a user, such as a handheld device that has a wireless connection function, or another processing device that is connected to a wireless modem.
(5) A terminal cluster is a set of terminals that have same linear movement, such as a set including terminals on a vehicle.
(6) A cell is a wireless coverage area identified by using a base station identifier or a cell global identifier. The cell is a logical concept and is not limited by physical implementation, such as the cell is not limited by a physical position of a radio frequency apparatus and is not limited by a quantity of radio frequency apparatuses that provide coverage. So the cell may also be referred to as a logical cell.
(7) "Multiple" refers to two or at least two. "And/Or" in this specification describes only an association relationship for describing associated objects and represents that three relationships may exist. For example, A and/or B may represent the following three cases: Only A exists, both A and B exist, and only B exists. The character "/" generally indicates an "or" relationship between the associated objects.

It has been pointed out in the background that, in a linear coverage scenario, a terminal that moves linearly has a problem of frequent handovers. To reduce a handover frequency of the terminal that moves linearly, two or even more radio frequency apparatuses may provide coverage for a same cell, so as to increase a coverage area of the cell, thereby reducing inter-cell handovers.

For example, referring to FIG. 2, FIG. 2 is a schematic diagram of an example of a communications system that provides a wireless service for a user on a train. As shown in FIG. 2, a radio frequency apparatus 231 and a radio frequency apparatus 232 jointly provide coverage for a cell Cell 1, and a radio frequency apparatus 233 and a radio frequency apparatus 234 jointly provide coverage for a cell Cell 2. Compared with the system shown in FIG. 1, in a process of moving along a railway 220, a train 210 passes through fewer cells, and therefore a handover frequency of a terminal may be reduced. However, limited to a baseband processing capability of a single cell, an extension range of the cell is limited. For example, radio frequency apparatuses that can be demodulated in a single cell are limited, and that a maximum of M radio frequency apparatuses can be demodulated is used as an example, where M is a positive integer. Therefore, a maximum of M radio frequency apparatuses may provide coverage for the cell, and in this case, a coverage area is limited. Therefore, there are still relatively frequent handovers, and there is an overlapped coverage area between cells, and therefore there is co-channel interference, which affects communication quality of the user.

In the prior art and in the foregoing example, a coverage area of a cell is stationary. When a terminal moves rapidly and moves to a position outside a coverage area of a current cell, the terminal is handed over to another cell. If the coverage area of a cell may dynamically change as a terminal moves, a problem that the terminal is frequently handed over between cells is resolved. Based on this analysis, the following embodiment of the present invention provides a solution of a dynamic cell whose coverage moves. An unchanged logical cell is provided for a terminal in a linear movement process, and a radio frequency apparatus that provides wireless network coverage is dynamically switched to change a range of a physical cell corresponding to the logical cell, so that the physical cell moves as the terminal moves, and the logical cell does not change. Therefore, in a high-speed moving process, the terminal may no longer be handed over, thereby greatly improving performance and communication quality of the communications system, and providing better user experience.

With reference to the accompanying drawings, the following describes in detail the foregoing solution of the dynamic cell.

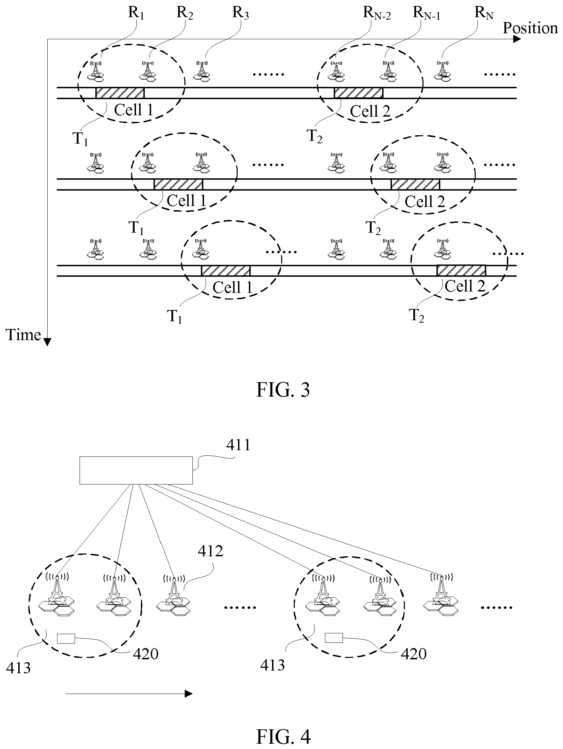

Referring to FIG. 3, FIG. 3 is a schematic diagram of a communications system according to an embodiment of the invention. The communications system is configured to provide a wireless communications service for a terminal that moves linearly. Similarly, a railway scenario is used an example, and multiple radio frequency apparatuses are disposed along a railway. As shown in FIG. 3, the multiple radio frequency apparatuses are respectively a radio frequency apparatus R₁ to a radio frequency apparatus R_{N}, and every two radio frequency apparatuses provide coverage for one cell. Certainly, this is merely an example, one or more than two radio frequency apparatuses may provide coverage for one cell. Specifically, a quantity of radio frequency apparatuses that provide wireless coverage for one cell may be set according to a baseband processing capability of a single cell. For example, when a single cell may support demodulation of a maximum of five radio frequency apparatuses, a maximum of five radio frequency apparatuses may be set to provide coverage for one cell. In addition, each train is corresponding to one cell. For simplicity herein, two trains are used as an example for description, and more trains are similar to the two trains. For example, a train T1 is corresponding to a cell Cell 1, and a train T2 is corresponding to a cell Cell 2. As the train T1 moves, the cell Cell 1 also moves. That is, a radio frequency apparatus that provides coverage for a terminal on the train T1 is continuously switched, so that physical coverage corresponding to the cell dynamically changes. Similarly, as the train T2 moves, the cell Cell 2 also moves. That is, a radio frequency apparatus that provides coverage for a terminal on the train T2 is continuously switched, so that physical coverage corresponding to the cell dynamically changes. Therefore, in a moving process of a train, a cell does not change. Because the cell does not change, there is no inter-cell handover and inter-cell interference, and therefore a problem of an inter-cell handover and inter-cell interference is resolved.

Although the railway scenario is used as an example in this embodiment for description, this communications system may be applied to any predictable linear movement scenario, such as a highway, a course, a seaway, or even a large-scale parade, and may also be used to provide communication support. In short, an application scenario of the solution is not limited in the present invention, and the solution may be applied to any predictable linear movement scenario. An embodiment of the present invention provides a communications system, including a first terminal cluster that moves linearly, and any communications device (referred to as a first communications device) that is provided in the following and configured to provide a wireless communications service for the first terminal cluster.

Optionally, the communications system may further include a second terminal cluster that moves linearly and whose movement direction is opposite to that of the first terminal cluster, and any communications device (referred to as a second communications device) that is provided in the following and configured to provide a wireless communications service for the second terminal cluster, where a frequency of a cell corresponding to the first terminal cluster is different from a frequency of a cell corresponding to the second terminal cluster. Optionally, the first communications device and the second communications device are a same device or different devices.

It should be noted that, in a railway scenario, in a moving period of a train, there is a requirement on a distance between trains. Therefore, each train is corresponding to one cell, and there is no case of overlapping cells. Even if there is a scenario in which trains move facing each other (that is, a movement direction of the first terminal cluster is opposite to the movement direction of the second terminal cluster), different frequencies may be configured for the cells corresponding to the two trains, so as to resolve a inter-cell interference problem.

In addition, optionally, a linear movement range of a terminal cluster is between two stations. It should be noted that, in a high-speed moving period of a train, an inter-cell handover problem is resolved by using the foregoing solution. When the train arrives at a station (an intermediate station or a destination station), and because the train is in a low-speed moving state or a stop moving state, in this case, a terminal enters a low-speed or stationary state. In this case, a terminal on the train may be handed over to another cell. Afterwards, when the train is restarted, a new cell is used to provide a service for the train. In addition, before arriving at a next station, the foregoing solution continues to be used, so as to ensure service quality of the terminal on the train. Therefore, a cost requirement of communications hardware between a baseband and a radio frequency may be reduced, and a hardware cost requirement of communication between the baseband and a core network is reduced.

It can be seen that compared with the communications systems shown in FIG. 1 and FIG. 2, in the foregoing communications system, a degraded communication quality problem caused by an inter-cell handover and interference in a linear movement process of a terminal may be resolved. In addition, compared with the communications system in FIG. 2, a capability, of a cell, of processing a maximum quantity of radio frequency apparatuses is not changed, and by continuously switching a radio frequency apparatus, an effect that a cell is not handed over is achieved.

Further referring to FIG. 4, an embodiment of the present invention further provides a communications device, which is configured to provide a wireless communications service for a terminal cluster that moves linearly. The communications device provides a wireless access function for the terminal cluster. For example, the communications device may be a base station. As shown in FIG. 4, the communications device includes a baseband apparatus 411 and multiple radio frequency apparatuses 412, where the radio frequency apparatuses 412 are all connected to the baseband apparatus 411. A connection manner of the radio frequency apparatuses 412 and the baseband apparatus 411 may be a wired connection, such as an optical fiber, or may be a wireless connection. Preferably, a wired connection manner may be used. The baseband apparatus 411 is configured to provide an unchanged cell 413 for a terminal cluster 420 in a linear movement process. The multiple radio frequency apparatuses 412 are separately connected to the baseband apparatus 411, disposed on a linear movement route of the terminal cluster 420, and provide wireless network linear coverage for the terminal cluster 420, where when the terminal cluster 420 moves to a coverage area of each radio frequency apparatus 412, each radio frequency apparatus 412 is configured to execute the following operations:
sending uplink data of the terminal cluster 420 to the baseband apparatus 411, so that the baseband apparatus 411 processes, by using a baseband resource of the cell 413, the uplink data that is of the terminal cluster 420 and sent by each radio frequency apparatus 412; or receiving downlink data that is for the terminal cluster 420 and obtained by performing processing by the baseband apparatus 411 by using a baseband resource of the cell 413, and sending the downlink data to the terminal cluster 420.

Preferably, the foregoing radio frequency apparatus may be a radio frequency device, or may be one or more radio frequency antennas. Specifically, the foregoing radio frequency apparatus may be a radio remote unit (Radio Remote Unit, RRU) connected by using the optical fiber, and is also referred to as a remote radio apparatus, remote radio head (Remote Radio Head, RRH), a radio remote head, or the like. The foregoing baseband apparatus may include one or more boards, and the baseband resource is one or more chip resources on a same or different boards. Uplink/downlink data may be independently demodulated or may be jointly demodulated on different boards.

It can be seen that, in the foregoing embodiment, multiple radio frequency apparatuses may provide wireless coverage for a same cell, so as to ensure that a cell in which a terminal cluster is located is not changed in a linear movement process of the terminal cluster. Because the cell is not changed, there is no inter-cell handover and inter-cell interference, so that service quality may be improved. Particularly, for a high-speed moving terminal, such as a terminal on a high-speed moving vehicle, an effect thereof is more remarkable.

In specific application, the foregoing radio frequency apparatuses may be all in an active (or started) state, and in this way, when a terminal moves to a corresponding radio frequency apparatus, the corresponding radio frequency apparatus receives or sends data; or a required radio frequency apparatus may be dynamically activated according to a movement rule of the terminal cluster. Preferably, considering a baseband processing capability and a requirement in an energy-saving aspect of a single cell, a part of the foregoing multiple radio frequency apparatuses provide wireless coverage that can cover the terminal cluster and that is of a same cell. For ease of description, the part of radio frequency apparatuses are referred to as a radio frequency apparatus group, and composition of the radio frequency apparatus group dynamically changes, so that a position of the provided wireless coverage of the cell dynamically changes as the terminal cluster moves linearly.

A quantity of the radio frequency apparatus groups may be fixed, or may dynamically change, for example, adjusted according to a coverage area and a layout condition of each radio frequency apparatus as long as it is ensured that the terminal cluster is covered.

To ensure that the baseband processing capability of a single cell can demodulate data of the cell in which a terminal is located, a quantity of radio frequency apparatuses in the radio frequency apparatus group may meet the following condition: it is assumed that the quantity is N, 1≤N≤M, where M is determined according to the baseband processing capability of the single cell, and may be less than a quantity of entire radio frequency apparatuses, and both M and N are integers. For example, for simplicity, that two radio frequency apparatuses provide coverage for the cell 413 in the figure is used as an example for description. Certainly, one or more than two radio frequency apparatuses may provide coverage for the cell. In addition, as the terminal cluster moves, this quantity may change. However, considering the baseband processing capability of a single cell, the quantity may be set to not exceed a maximum quantity of radio frequency apparatuses supported by the single cell. For example, when the single cell may support demodulation of a maximum of five radio frequency apparatuses, a maximum of five radio frequency apparatuses may be set to provide coverage for one cell.

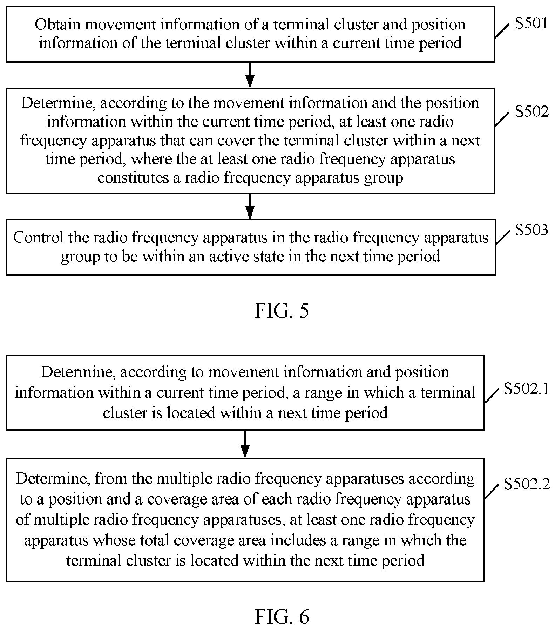

Specifically, the composition of the radio frequency apparatus group may be controlled by using the baseband apparatus 411. For example, the composition of the radio frequency apparatus group is controlled according to movement information and position information of the terminal cluster. For an implementation example of this process, refer to FIG. 5. As shown in FIG. 5, the baseband apparatus controls the composition of the radio frequency apparatus group by executing the following operations:
S501. Obtain movement information of the terminal cluster and position information of the terminal cluster within a current time period.

A specific value of the "time period" and an obtaining manner of the value are not limited in this embodiment of the present invention. Specifically, the specific value of the "time period" may be determined according to information, such as a movement speed of the terminal cluster and a distance between adjacent radio frequency apparatuses on the linear movement route. In addition, the specific value of the "time period" may be determined according to information, such as time used by the terminal cluster from moving into a coverage area of a radio frequency apparatus to moving out of the coverage area of the radio frequency apparatus.

The "movement information" may include one or more pieces of information, such as a movement direction, a movement speed, and a state (including a moving state and a stationary state) that the terminal cluster is in within a next time period. It should be noted that, the movement direction of the terminal cluster in a linear coverage scenario may be predicted. Specifically, the movement direction of the terminal cluster may be determined according to historical position information of the terminal cluster. In addition, the baseband apparatus may receive any movement information sent by a device on a core network side or another device. The "position information" may be absolute position information or relative position information of the terminal cluster, where the absolute position information may be longitude and latitude of the terminal cluster, and the relative position information may be information about a position, of the terminal cluster, relative to the linear movement route of the terminal cluster. Optionally, the terminal cluster is a terminal cluster located on a vehicle (such as a train). In this case, a position of the terminal cluster moves as the vehicle moves. Therefore, during specific implementation, the "position information" may also be position information of the vehicle on which the terminal cluster is located.

Optionally, the baseband apparatus obtains the position information of the terminal cluster within the current time period in any one of the following manners:
Manner 1: Receiving the position information that is of the terminal cluster within the current time period and sent by a core network device. The core network device may be a network device in which a monitoring system configured to monitor a vehicle is located, such as a network device in which a monitoring system of a train is located, or a network device in which an aero-monitoring system is located. The core network device stores the position information of the terminal cluster within the current time period. During specific implementation, the baseband apparatus may receive, through a communications interface between a base station and the core network device, the position information that is of the terminal cluster within the current time period and sent by the core network device.
Manner 2: Receiving the position information that is of the terminal cluster within the current time period and sent by a terminal in the terminal cluster. The baseband apparatus may negotiate with a terminal or some terminals in the terminal cluster in advance, so that these terminals regularly or periodically send the position information of the terminal cluster within the current time period to the baseband apparatus.
Manner 3: Receiving uplink signal measurement information sent by a radio frequency apparatus in an active state at different moments, and obtain the position information of the terminal cluster within the current time period according to the uplink signal measurement information sent at different moments. For example, the uplink signal measurement information may be reference signal received power (Reference Signal Received Power, RSRP) information.

It should be noted that, the radio frequency apparatus in the active state periodically sends the uplink signal measurement information to the baseband apparatus, and transmit power that is of the uplink signal measurement information and exists when there is a terminal cluster in a coverage area of the radio frequency apparatus is greater than transmit power that is of the uplink signal measurement information and exists when there is no terminal cluster in the coverage area of the radio frequency apparatus. Therefore, the baseband apparatus may obtain the position information of the terminal cluster within the current time period according to transmit power (that is, strength) of uplink signal measurement information that is received by a radio frequency apparatus in the active state at different moments. Specifically, if a difference between strength of uplink measurement information that is received by the baseband apparatus at a moment and sent by the radio frequency apparatus and strength of an uplink measurement signal that is received at a next moment of the moment and sent by the radio frequency apparatus is greater than or equal to a threshold, it indicates that the terminal cluster just leaves the coverage area of the radio frequency apparatus at the next moment of the moment. In this case, further with reference to information, such as the movement speed of the terminal cluster, the position information of the terminal cluster within the current time period may be obtained. A specific value of the threshold is not limited in this embodiment of the present invention.

S502. Determine, according to the movement information and the position information within the current time period, at least one radio frequency apparatus that can cover the terminal cluster within a next time period, where the at least one radio frequency apparatus constitutes a radio frequency apparatus group.

"The radio frequency apparatus group that can cover the terminal cluster within the next time period" may specifically be a radio frequency apparatus group whose total coverage area can cover the terminal cluster within the next time period. "The total coverage area" may include a position and a size of the total coverage area.

"The position of the total coverage area" is determined by the position in which the terminal cluster is located. Optionally, the position in which the terminal cluster is located may be determined according to a position of the vehicle on which the terminal cluster is located, and changes as the vehicle moves.

"The size of the total coverage area" is determined by a range in which the terminal cluster is located. Optionally, the range in which the terminal cluster is located may be determined according to information, such as a length and a width of the vehicle on which the terminal cluster is located. When one cell is corresponding to one vehicle, and radio frequency apparatuses have same spacing and coverage area, a size of a range in which a terminal cluster corresponding to the cell is located keeps unchanged. In this case, a quantity of at least one radio frequency apparatus that can cover the terminal cluster within different time periods generally does not change. If one cell is corresponding to multiple vehicles, and because position information (such as a movement speed and a movement direction) of the vehicles may be different, in this case, a size of a range in which a terminal cluster corresponding to the cell is located changes as all the vehicles move. In this case, a quantity of at least one radio frequency apparatus that can cover the terminal cluster within different time periods may be different.

During specific implementation, because the movement speed of the terminal cluster is relatively fast, the total coverage area of the radio frequency apparatus group generally needs to be larger than the range in which the terminal cluster is located.

Optionally, referring to FIG. 6, step S502 may include:
S502.1. Determine, according to the movement information and the position information within the current time period, a range in which the terminal cluster is located within the next time period.
S502.2. Determine, from the multiple radio frequency apparatuses according to a position and a coverage area of each radio frequency apparatus of the multiple radio frequency apparatuses, at least one radio frequency apparatus whose total coverage area includes the range in which the terminal cluster is located within the next time period.

The position and the coverage area of each radio frequency apparatus may be pre-stored in the baseband apparatus. During specific implementation, when a communications network architecture in the linear coverage scenario is created, the position and the coverage area of each radio frequency apparatus may be stored in the baseband apparatus.

S503. Control the radio frequency apparatus in the radio frequency apparatus group to be in an active state within the next time period.

It should be noted that in the prior art, because the baseband apparatus and a radio frequency apparatus cannot learn information (such as information about when to pass through a coverage area of the radio frequency apparatus) of the terminal cluster, all radio frequency apparatuses need to be kept in the active state, so as to be ready to receive at any moment a signal sent by the terminal cluster. In this way, when the terminal cluster is not in a cell in which a radio frequency apparatus is located, power consumption is relatively large. In this optional implementation, because the baseband apparatus of the cell can learn a target radio frequency apparatus group whose total coverage area can cover the terminal cluster within the next time period, only target radio frequency apparatus in the target radio frequency apparatus group need to be in the active state within the next time period, and other radio frequency apparatuses may be in an inactive state, so as to reduce power consumption.

Optionally, step S503 may be implemented in the following manner: activating a radio frequency apparatus that is in the radio frequency apparatus group and in an inactive state, which may be specifically described as: activating "a" radio frequency apparatuses, of the terminal cluster, that are in the movement direction of the terminal cluster and whose coverage is before the range in which the terminal cluster is located, where "a" is greater than or equal to 1, and "a" is an integer.

Optionally, the baseband apparatus is further configured to deactivate a radio frequency apparatus that is in a linear movement direction of the terminal cluster, outside the range in which the terminal cluster is located, and in an active state, which may be specifically described as: deactivating "b" radio frequency apparatuses, of the terminal cluster, that are in the movement direction of the terminal cluster and whose coverage is behind the range in which the terminal cluster is located, where "b" is greater than or equal to 1, and "b" is an integer.

It should be noted that, when the terminal cluster is on one vehicle, and radio frequency apparatuses have same spacing and coverage area, "a" may generally be equal to "b". That is, the baseband apparatus of a cell activates a radio frequency apparatuses that are in a movement direction of a terminal cluster on a vehicle corresponding to the cell and whose coverage is before a range in which the terminal cluster is located; and deactivates "b" radio frequency apparatuses that are in the movement direction of the terminal cluster and whose coverage is behind the range in which the terminal cluster is located. Preferably, a=b=1.

In addition, this optional implementation may be described as follows: the baseband apparatus determines according to the movement direction and the position information of the terminal cluster and in a "sliding window" manner, a radio frequency apparatus that communicates with the baseband apparatus.

A technical solution provided in this embodiment of the present invention can provide a good wireless communications service for a terminal that moves linearly. In addition, this technical solution can further reduce a baseband resource. Specifically, that a terminal cluster including terminals on a train in a railway scenario is used as an example for description. In the prior art, a quantity of baseband apparatuses is B×(R÷A), where B indicates a quantity of baseband apparatuses occupied by each cell (Baseband Per Cell), R indicates a quantity of radio frequency apparatuses along a railway (Radio Antenna Num), and A indicates a quantity of radio frequency apparatuses required for covering one train (Antenna Num Of Cell). In this embodiment of the present invention, because the baseband apparatus is in a one-to-one correspondence with the terminal cluster, a quantity of baseband apparatuses is B×T, where T indicates a quantity of trains simultaneously running on the railway (Train Num). Because a value of R÷A is generally greater than a value of T, a baseband resource can be reduced by using the communication method provided in this embodiment of the present invention. For example, when R=200, B=1, A=5, and T=4, 36 baseband apparatuses may be reduced.

The technical solution provided in this embodiment of the present invention may be applied to a linear coverage scenario based on various communications systems. The communications systems may include an 2G communications system, a 3G communications system, a 4G communications system, a 5G communications system, and the like, such as a Global System for Mobile Communications (Global System for Mobile Communications, GSM), a Time Division-Synchronous Code Division Multiple Access (Time Division-Synchronous Code Division Multiple Access, TDMA) system, a Code Division Multiple Access (Code Division Multiple Access, CDMA) system, a CDMA 2000 system, a general packet radio service (General Packet Wireless service, GPRS) system, a Universal Mobile Telecommunications System (Universal Mobile Telecommunications System, UMTS), a Worldwide Interoperability for Microwave Access (Worldwide Interoperability for Microwave Access, WiMAX) system, Long Term Evolution (Long Term Evolution, LTE) and another communications system of this type. The linear coverage scenario includes a train scenario, an airplane-course scenario, a highway scenario, a ship scenario, and the like.

## Claims

1. A communications device, wherein the device is configured to provide a wireless communications service for a terminal cluster (420) that moves linearly, and the device comprises:
- a baseband apparatus (411), configured to provide a logical cell (413) for the terminal cluster (420) in a linear movement process; and multiple radio frequency apparatuses (412), which are separately connected to the baseband apparatus (411), which are disposed on a linear movement route of the terminal cluster (420), and which are configured to provide wireless network linear coverage for the terminal cluster (420), wherein
- a part of the multiple radio frequency apparatuses (412) is configured to provide wireless coverage that covers the terminal cluster (420) and that is of the logical cell (413), wherein the part of radio frequency apparatuses (412) are referred to as a radio frequency apparatus group, and
- the baseband apparatus is configured to dynamically change the composition of the radio frequency apparatus group, so that a position of the provided wireless coverage of the logical cell (413) dynamically changes as the terminal cluster (420) moves linearly, so that the logical cell remains unchanged for the terminal cluster (420) in the linear movement process;
- a respective radio frequency apparatus of the multiple radio frequency apparatuses (412) is configured, when the terminal cluster (420) moves to a coverage area of the respective radio frequency apparatus, to send uplink data of the terminal cluster (420) to the baseband apparatus (411), and the baseband apparatus (411) is configured to process, by using a baseband resource of the logical cell (413), the uplink data that is of the terminal cluster (420) and sent by the respective radio frequency apparatus; or the respective radio frequency apparatus is further configured, when the terminal cluster (420) moves to a coverage area of the respective radio frequency apparatus, to receive downlink data that is for the terminal cluster (420) and obtained by performing processing by the baseband apparatus (411) by using a baseband resource of the logical cell (413), and to send the downlink data to the terminal cluster (420).

2. The device according to claim 1, wherein a quantity of radio frequency apparatuses in the radio frequency apparatus group is N, and 1≤N≤M, wherein M is less than a quantity of the radio frequency apparatuses, M is determined according to a baseband processing capability of a single cell, and both N and M are integers.

3. The device according to claim 1 or 2, wherein the baseband apparatus (411) is further configured to control the composition of the radio frequency apparatus group.

4. The device according to claim 3, wherein the baseband apparatus (411) is configured to control the composition of the radio frequency apparatus group according to movement information and position information of the terminal cluster (420).

5. The device according to claim 4, wherein the baseband apparatus (411) is configured to execute the following operations so as to control the composition of the radio frequency apparatus group:
obtaining the movement information of the terminal cluster (420) and position information of the terminal cluster (420) within a current time period;
determining, according to the movement information and the position information within the current time period, at least one radio frequency apparatus that can cover the terminal cluster (420) within a next time period, wherein the at least one radio frequency apparatus constitutes the radio frequency apparatus group; and
controlling the radio frequency apparatus in the radio frequency apparatus group to be in an active state within the next time period.

6. The device according to claim 5, wherein the baseband apparatus (411) is configured to obtain the position information of the terminal cluster (420) within the current time period in the following manner:
receiving the position information that is of the terminal cluster (420) within the current time period and sent by a core network device; or
receiving the position information that is of the terminal cluster (420) within the current time period and sent by a terminal in the terminal cluster (420); or
receiving uplink signal measurement information sent by a radio frequency apparatus in the active state at different moments, and obtaining the position information of the terminal cluster (420) within the current time period according to the uplink signal measurement information sent at different moments.

7. The device according to claim 5 or 6, wherein the baseband apparatus (411) is configured to determine the at least one radio frequency apparatus that can cover the terminal cluster (420) within the next time period, in the following manner:
determining, according to the movement information and the position information within the current time period, a range in which the terminal cluster (420) is located within the next time period; and
determining, from the multiple radio frequency apparatuses (412) according to a position and a coverage area of each of the multiple radio frequency apparatuses (412), the at least one radio frequency apparatus whose total coverage area comprises the range in which the terminal cluster (420) is located within the next time period.

8. The device according to any one of claims 5 to 7, wherein the baseband apparatus (411) is configured to control, in the following manner, the radio frequency apparatus in the radio frequency apparatus group to be in the active state within the next time period:
activating a radio frequency apparatus that is in the radio frequency apparatus group and in an inactive state.

9. The device according to any one of claims 5 to 8, wherein the baseband apparatus (411) is further configured to:
deactivate a radio frequency apparatus that is in a linear movement direction of the terminal cluster (420), outside the range in which the terminal cluster (420) is located, and in an active state.

10. The device according to any one of claims 1 to 9, wherein the terminal cluster (420) is a terminal cluster located on a train.

11. The device according to claim 10, wherein a linear movement range of the terminal cluster (420) is between two stations.

12. A communications system, comprising:
a first terminal cluster that moves linearly; and
a first communications device according to any one of claims 1 to 11 that is configured to provide a wireless communications service for the first terminal cluster.

13. The system according to claim 12, further comprising:
a second terminal cluster that moves linearly, wherein a movement direction of the second terminal cluster is opposite to that of the first terminal cluster; and
a second communications device according to any one of claims 1 to 11 that is configured to provide a wireless communications service for the second terminal cluster, wherein a frequency of a logical cell corresponding to the first terminal cluster is different from a frequency of a logical cell corresponding to the second terminal cluster.

14. A communications method, wherein the method is executed by a communications device according to any one of claims 1 to 11, and wherein the method comprises:
providing, by a baseband apparatus (411), a logical cell (413) for a terminal cluster (420) in a linear movement process;
providing wireless linear coverage for the terminal cluster (420) by multiple radio frequency apparatuses, which are separately connected to the baseband apparatus and which are disposed on a linear movement route of the terminal cluster (420);
providing, by a part of the multiple radio frequency apparatuses (412), wireless coverage that covers the terminal cluster (420) and that is of the logical cell (413), wherein the part of the radio frequency apparatuses (412) are referred to as a radio frequency apparatus group;
dynamically changing, by the baseband apparatus (411), the composition of the radio frequency apparatus group, so that a position of the provided wireless coverage of the logical cell (413) dynamically changes as the terminal cluster (412) moves linearly, so that the logical cell remains unchanged for the terminal cluster (420) in the linear movement process;
when the terminal cluster (420) moves to a coverage area of a respective radio frequency apparatus of the multiple radio frequency apparatuses (412), sending, by the respective radio frequency apparatus, uplink data of the terminal cluster (420) to the baseband apparatus (411), so that the baseband apparatus (411) processes, by using a baseband resource of the logical cell (413), the uplink data that is of the terminal cluster (420) and sent by the respective radio frequency apparatus; or the respective radio frequency apparatus receiving, when the terminal cluster (420) moves to the coverage area of the respective radio frequency apparatus, downlink data that is for the terminal cluster (420) and obtained by performing processing by the baseband apparatus (411) by using a baseband resource of the cell (413), and sending the downlink data to the terminal cluster (420).

## Patentansprüche

1. Kommunikationsvorrichtung, wobei die Vorrichtung dazu ausgelegt ist, einen kabellosen Kommunikationsdienst für ein Endgerätecluster (420) bereitzustellen, das sich linear bewegt, wobei die Vorrichtung Folgendes umfasst:
- eine Basisbandeinrichtung (411), ausgelegt zum Bereitstellen einer logischen Zelle (413) für das Endgerätecluster (420) in einem linearen Bewegungsprozess; und
mehrere Hochfrequenzeinrichtungen (412), die separat mit der Basisbandeinrichtung (411) verbunden sind, die auf einer linearen Bewegungsroute des Endgeräteclusters (420) angeordnet sind und die dazu ausgelegt sind, lineare kabellose Netzwerkabdeckung für das Endgerätecluster (420) bereitzustellen, wobei
- ein Teil der mehreren Hochfrequenzeinrichtungen (412) dazu ausgelegt ist, kabellose Abdeckung bereitzustellen, die das Endgerätecluster (420) abdeckt und die von der logischen Zelle (413) ist, wobei der Teil der Hochfrequenzeinrichtungen (412) als eine Hochfrequenzeinrichtungsgruppe bezeichnet wird, und
- die Basisbandeinrichtung dazu ausgelegt ist, die Zusammensetzung der Hochfrequenzeinrichtungsgruppe dynamisch zu ändern, sodass sich eine Position der bereitgestellten kabellosen Abdeckung der logischen Zelle (413) dynamisch ändert, wenn sich das Endgerätecluster (420) linear bewegt, sodass die logische Zelle für das Endgerätecluster (420) in dem linearen Bewegungsprozess unverändert bleibt;
- eine entsprechende Hochfrequenzeinrichtung der mehreren Hochfrequenzeinrichtungen (412) dazu ausgelegt ist, wenn sich das Endgerätecluster (420) zu einem Abdeckungsbereich der entsprechenden Hochfrequenzeinrichtung bewegt, Uplink-Daten des Endgeräteclusters (420) an die Basisbandeinrichtung (411) zu senden, und die Basisbandeinrichtung (411) dazu ausgelegt ist, unter Verwendung einer Basisbandressource der logischen Zelle (413), die Uplink-Daten zu verarbeiten, die vom Endgerätecluster (420) sind und durch die entsprechende Hochfrequenzeinrichtung gesendet wurden; oder
die entsprechende Hochfrequenzeinrichtung ferner dazu ausgelegt ist, wenn sich das Endgerätecluster (420) zu einem Abdeckungsbereich der entsprechenden Hochfrequenzeinrichtung bewegt, Downlink-Daten zu empfangen, die für das Endgerätecluster (420) sind und die durch Durchführen von Verarbeitung durch die Basisbandeinrichtung (411) und unter Verwendung einer Basisbandressource der logischen Zelle (413) erhalten wurden, und die Downlink-Daten an das Endgerätecluster (420) zu senden.

2. Vorrichtung nach Anspruch 1, wobei eine Anzahl von Hochfrequenzeinrichtungen in der Hochfrequenzeinrichtungsgruppe N ist, und 1≤N≤M, wobei M kleiner als eine Anzahl der Hochfrequenzeinrichtungen ist, M entsprechend einer Basisbandverarbeitungsfähigkeit einer einzelnen Zelle bestimmt wird, und sowohl N als auch M ganze Zahlen sind.

3. Vorrichtung nach Anspruch 1 oder 2, wobei die Basisbandeinrichtung (411) ferner dazu ausgelegt ist, die Zusammensetzung der Hochfrequenzeinrichtungsgruppe zu steuern.

4. Vorrichtung nach Anspruch 3, wobei die Basisbandeinrichtung (411) dazu ausgelegt ist, die Zusammensetzung der Hochfrequenzeinrichtungsgruppe entsprechend der Bewegungsinformationen und der Positionsinformationen des Endgeräteclusters (420) zu steuern.

5. Vorrichtung nach Anspruch 4, wobei die Basisbandeinrichtung (411) ferner dazu ausgelegt ist, die folgenden Operationen auszuführen, um die Zusammensetzung der Hochfrequenzeinrichtungsgruppe zu steuern.
Abrufen der Bewegungsinformationen des Endgeräteclusters (420) und Positionsinformationen des Endgeräteclusters (420) innerhalb einer aktuellen Zeitspanne; Bestimmen, entsprechend den Bewegungsinformationen und den Positionsinformationen innerhalb der aktuellen Zeitspanne, von zumindest einer Hochfrequenzeinrichtung, die das Endgerätecluster (420) innerhalb einer nächsten Zeitspanne abdecken kann, wobei die zumindest eine Hochfrequenzeinrichtung die Hochfrequenzeinrichtungsgruppe bildet; und Steuern der Hochfrequenzeinrichtung in der Hochfrequenzeinrichtungsgruppe, innerhalb der nächsten Zeitspanne in einem aktiven Zustand zu sein.

6. Vorrichtung nach Anspruch 5, wobei die Basisbandeinrichtung (411) dazu ausgelegt ist, die Positionsinformationen des Endgeräteclusters (420) innerhalb der aktuellen Zeitspanne in der folgenden Weise abzurufen:
Empfangen der Positionsinformationen, die vom Endgerätecluster (420) innerhalb der aktuellen Zeitspanne ist und durch eine Kernnetzwerkvorrichtung gesendet wurde; oder
Empfangen der Positionsinformationen, die vom Endgerätecluster (420) innerhalb der aktuellen Zeitspanne ist und durch ein Endgerät in dem Endgerätecluster (420) gesendet wurde; oder
Empfangen von Uplink-Signalmessinformationen, die von einer Hochfrequenzeinrichtung im aktiven Zustand zu unterschiedlichen Zeitpunkten gesendet wurden, und Abrufen der Positionsinformationen des Endgeräteclusters (420) innerhalb der aktuellen Zeitspanne entsprechend den zu unterschiedlichen Zeitpunkten gesendeten Uplink-Signalmessinformationen.

7. Vorrichtung nach Anspruch 5 oder 6, wobei die Basisbandeinrichtung (411) dazu ausgelegt ist, die zumindest eine Hochfrequenzeinrichtung, die das Endgerätecluster (420) innerhalb der nächsten Zeitspanne abdecken kann, in der folgenden Weise zu bestimmen:
Bestimmen, entsprechend den Bewegungsinformationen und den Positionsinformationen innerhalb der aktuellen Zeitspanne, eines Bereiches, in dem sich das Endgerätecluster (420) innerhalb der nächsten Zeitspanne befindet; und
Bestimmen, aus den mehreren Hochfrequenzeinrichtungen (412) entsprechend einer Position und einem Abdeckungsbereich von jeder der mehreren Hochfrequenzeinrichtungen (412), der zumindest einen Hochfrequenzeinrichtung, deren Gesamtabdeckungsbereich den Bereich umfasst, in dem sich das Endgerätecluster (420) innerhalb der nächsten Zeitspanne befindet.

8. Vorrichtung nach einem der Ansprüche 5 bis 7, wobei die Basisbandeinrichtung (411) dazu ausgelegt ist, in der folgenden Weise die Hochfrequenzeinrichtung in der Hochfrequenzeinrichtungsgruppe zu steuern, innerhalb der nächsten Zeitspanne im aktiven Zustand zu sein:
Aktivieren einer Hochfrequenzeinrichtung, die in der Hochfrequenzeinrichtungsgruppe und in einem inaktiven Zustand ist.

9. Vorrichtung nach einem der Ansprüche 5 bis 8, wobei die Basisbandeinrichtung (411) ferner ausgelegt ist zum:
Deaktivieren einer Hochfrequenzeinrichtung, die in einer linearen Bewegungsrichtung des Endgeräteclusters (420), außerhalb des Bereichs, in dem sich das Endgerätecluster (420) befindet, und in einem aktiven Zustand ist.

10. Vorrichtung nach einem der Ansprüche 1 bis 9, wobei das Endgerätecluster (420) ein Endgerätecluster ist, das sich auf einem Zug befindet.

11. Vorrichtung nach Anspruch 10, wobei ein linearer Bewegungsbereich des Endgeräteclusters (420) zwischen zwei Bahnhöfen ist.

12. Kommunikationssystem, das Folgendes umfasst:
ein erstes Endgerätecluster, das sich linear bewegt; und
eine erste Kommunikationsvorrichtung nach einem der Ansprüche 1 bis 11, die dazu ausgelegt ist, einen kabellosen Kommunikationsdienst für das erste Endgerätecluster bereitzustellen.

13. System nach Anspruch 12, das ferner Folgendes umfasst:
ein zweites Endgerätecluster, das sich linear bewegt, wobei eine Bewegungsrichtung des zweiten Endgeräteclusters der des ersten Endgeräteclusters entgegengesetzt ist; und
eine zweite Kommunikationsvorrichtung nach einem der Ansprüche 1 bis 11, die dazu ausgelegt ist, einen kabellosen Kommunikationsdienst für das zweite Endgerätecluster bereitzustellen, wobei eine Frequenz einer logischen Zelle entsprechend dem ersten Endgerätecluster verschieden von einer Frequenz einer logischen Zelle entsprechend dem zweiten Endgerätecluster ist.

14. Kommunikationsverfahren, wobei das Verfahren durch eine Kommunikationsvorrichtung nach einem der Ansprüche 1 bis 11 ausgeführt wird, und wobei das Verfahren Folgendes umfasst: Bereitstellen, durch eine Basisbandeinrichtung (411), einer logischen Zelle (413) für ein Endgerätecluster (420) in einem linearen Bewegungsprozess;
Bereitstellen von kabelloser linearer Abdeckung für das Endgerätecluster (420) durch mehrere Hochfrequenzeinrichtungen, die separat mit der Basisbandeinrichtung verbunden sind und die auf einer linearen Bewegungsroute des Endgeräteclusters (420) angeordnet sind;
Bereitstellen, durch einen Teil der mehreren Hochfrequenzeinrichtungen (412), von kabelloser Abdeckung, die das Endgerätecluster (420) abdeckt und die von der logischen Zelle (413) ist, wobei der Teil der Hochfrequenzeinrichtungen (412) als eine Hochfrequenzeinrichtungsgruppe bezeichnet wird; dynamisches Ändern, durch die Basisbandeinrichtung (411), der Zusammensetzung der Hochfrequenzeinrichtungsgruppe, sodass sich eine Position der bereitgestellten kabellosen Abdeckung der logischen Zelle (413) dynamisch ändert, wenn sich das Endgerätecluster (412) linear bewegt, sodass die logische Zelle für das Endgerätecluster (420) im linearen Bewegungsprozess unverändert bleibt; wenn sich das Endgerätecluster (420) zu einem Abdeckungsbereich einer entsprechenden Hochfrequenzeinrichtung der mehreren Hochfrequenzeinrichtungen (412) bewegt, Senden, durch die entsprechende Hochfrequenzeinrichtung, von Uplink-Daten des Endgeräteclusters (420) an die Basisbandeinrichtung (411), sodass die Basisbandeinrichtung (411), unter Verwendung einer Basisbandressource der logischen Zelle (413), die Uplink-Daten verarbeitet, die von dem Endgerätecluster (420) sind und durch die entsprechende Hochfrequenzeinrichtung gesendet wurden; oder wobei die entsprechende Hochfrequenzeinrichtung, wenn sich das Endgerätecluster (420) zu dem Abdeckungsbereich der entsprechenden Hochfrequenzeinrichtung bewegt, Downlink-Daten empfängt, die für das Endgerätecluster (420) sind und durch Durchführen von Verarbeitung durch die Basisbandeinrichtung (411) unter Verwendung einer Basisbandressource der Zelle (413) erhalten werden, und die Downlink-Daten an das Endgerätecluster (420) sendet.

## Revendications

1. Dispositif de communication, le dispositif étant configuré pour fournir un service de communication sans fil pour une grappe de terminaux (420) qui se déplace linéairement, et le dispositif comprenant :
- un appareil de bande de base (411), configuré pour fournir une cellule logique (413) pour la grappe de terminaux (420) dans un processus de déplacement linéaire ; et
de multiples appareils radiofréquence (412), qui sont connectés séparément à l'appareil de bande de base (411), qui sont disposés sur un itinéraire de déplacement linéaire de la grappe de terminaux (420), et qui sont configurés pour fournir une couverture linéaire de réseau sans fil pour la grappe de terminaux (420),
une partie des multiples appareils radiofréquence (412) étant configurée pour fournir une couverture sans fil qui couvre la grappe de terminaux (420) et qui est de la cellule logique (413), la partie des appareils radiofréquence (412) étant désignée comme un groupe d'appareils radiofréquence, et
l'appareil de bande de base étant configuré pour changer dynamiquement la composition du groupe d'appareils radiofréquence, de sorte qu'une position de la couverture sans fil fournie de la cellule logique (413) change de façon dynamique lorsque la grappe de terminaux (420) se déplace linéairement, de telle sorte que la cellule logique reste inchangée pour la grappe de terminaux (420) dans le processus de déplacement linéaire ;
un appareil radiofréquence respectif parmi les multiples appareils radiofréquence (412) étant configuré, lorsque la grappe de terminaux (420) se déplace vers une zone de couverture de l'appareil radiofréquence respectif, pour envoyer des données de liaison montante de la grappe de terminaux (420) à l'appareil de bande de base (411), et l'appareil de bande de base (411) étant configuré pour traiter, à l'aide d'une ressource de bande de base de la cellule logique (413), les données de liaison montante qui sont de la grappe de terminaux (420) et envoyées par l'appareil radiofréquence respectif ; ou
l'appareil radiofréquence respectif étant en outre configuré, lorsque la grappe de terminaux (420) se déplace vers une zone de couverture de l'appareil radiofréquence respectif, pour recevoir des données de liaison descendante qui sont pour la grappe de terminaux (420) et obtenue par réalisation d'un traitement par l'appareil de bande de base (411) à l'aide d'une ressource de bande de base de la cellule logique (413), et pour envoyer les données de liaison descendante à la grappe de terminaux (420).

2. Dispositif selon la revendication 1, une quantité d'appareils radiofréquence dans le groupe d'appareils radiofréquence étant N, et 1≤N≤M, M étant inférieur à une quantité des appareils radiofréquence, M étant déterminé en fonction d'une capacité de traitement de bande de base d'une cellule unique, et N et M étant tous deux des nombres entiers.

3. Dispositif selon la revendication 1 ou 2, l'appareil de bande de base (411) étant en outre configuré pour commander la composition du groupe d'appareils radiofréquence.

4. Dispositif selon la revendication 3, l'appareil de bande de base (411) étant configuré pour commander la composition du groupe d'appareils radiofréquence en fonction d'informations de déplacement et d'informations de position de la grappe de terminaux (420).

5. Dispositif selon la revendication 4, l'appareil de bande de base (411) étant configuré pour exécuter les opérations suivantes de façon à commander la composition du groupe d'appareils radiofréquence :
l'obtention des informations de déplacement de la grappe de terminaux (420) et des informations de position de la grappe de terminaux (420) à l'intérieur d'une période de temps courante ;
la détermination, en fonction des informations de déplacement et des informations de position à l'intérieur de la période de temps courante, au moins un appareil radiofréquence qui peut couvrir la grappe de terminaux (420) à l'intérieur d'une période de temps suivante, le ou les appareils de radiofréquence constituant le groupe d'appareils de radiofréquence ; et
la commande de l'appareil radiofréquence dans le groupe d'appareils radiofréquence pour être dans un état actif à l'intérieur de la période de temps suivante.

6. Dispositif selon la revendication 5, l'appareil de bande de base (411) étant configurée pour obtenir les informations de position de la grappe de terminaux (420) à l'intérieur de la période de temps courante de la manière suivante :
la réception des informations de position qui sont de la grappe de terminaux (420) à l'intérieur de la période de temps courante et envoyées par un dispositif de réseau central ; ou
la réception des informations de position qui sont de la grappe de terminaux (420) à l'intérieur de la période de temps courante et envoyées par un terminal dans la grappe de terminaux (420) ; ou
la réception d'informations de mesure de signal de liaison montante envoyées par un appareil radiofréquence dans l'état actif à différents moments, et l'obtention des informations de position de la grappe de terminaux (420) à l'intérieur de la période de temps courante en fonction des informations de mesure de signal de liaison montante envoyées à différents moments.

7. Dispositif selon la revendication 5 ou 6, l'appareil de bande de base (411) étant configuré pour déterminer :
le ou les appareils de radiofréquence qui peuvent couvrir la grappe de terminaux (420) à l'intérieur de la période de temps suivante, de la manière suivante :
la détermination, en fonction des informations de déplacement et des informations de position à l'intérieur de la période de temps courante, d'une plage dans laquelle la grappe de terminaux (420) est située, à l'intérieur de la période de temps suivante ; et
la détermination, parmi les multiples appareils radiofréquence (412) en fonction d'une position et d'une zone de couverture de chacun des multiples appareils radiofréquence (412), du ou des appareils de radiofréquence dont la zone. de couverture totale comprend la plage dans laquelle la grappe de terminaux (420) est située, à l'intérieur de la période de temps suivante.

8. Dispositif selon l'une quelconque des revendications 5 à 7, l'appareil de bande de base (411) étant configuré pour commander, de la manière suivante, l'appareil radiofréquence dans le groupe d'appareils radiofréquence pour être dans l'état actif à l'intérieur de la période de temps suivante :
l'activation d'un appareil radiofréquence qui est dans le groupe d'appareils radiofréquence et dans un état inactif.

9. Dispositif selon l'une quelconque des revendications 5 à 8, l'appareil de bande de base (411) étant en outre configuré pour :
désactiver un appareil radiofréquence qui est dans une direction de déplacement linéaire de la grappe de terminaux (420), à l'extérieur de la plage dans laquelle se trouve la grappe de terminaux (420), et dans un état actif.

10. Dispositif selon l'une quelconque des revendications 1 à 9, la grappe de terminaux (420) étant une grappe de terminaux située sur un train.

11. Dispositif selon la revendication 10, une plage de déplacement linéaire de la grappe de terminaux (420) se trouvant entre deux stations.

12. Système de communication, comprenant :
une première grappe de terminaux qui se déplace linéairement ; et
un premier dispositif de communication selon l'une quelconque des revendications 1 à 11, qui est configuré pour fournir un service de communication sans fil pour la première grappe de terminaux.

13. Système selon la revendication 12, comprenant en outre :
une seconde grappe de terminaux qui se déplace linéairement, une direction de déplacement de la seconde grappe de terminaux étant opposée à celle de la première grappe de terminaux ; et
un second dispositif de communication selon l'une quelconque des revendications 1 à 11, qui est configuré pour fournir un service de communication sans fil pour la seconde grappe de terminaux, une fréquence d'une cellule logique correspondant à la première grappe de terminaux étant différente d'une fréquence d'une cellule logique correspondant à la seconde grappe de terminaux.

14. Procédé de communication, le procédé étant exécuté par un dispositif de communication selon l'une quelconque des revendications 1 à 11, et le procédé comprenant :
la fourniture, par un appareil de bande de base (411), d'une cellule logique (413) pour une grappe de terminaux (420) dans un processus de déplacement linéaire ;
la fourniture d'une couverture linéaire sans fil pour la grappe de terminaux (420) par de multiples appareils radiofréquence, qui sont connectés séparément à l'appareil de bande de base et qui sont disposés sur un itinéraire de déplacement linéaire de la grappe de terminaux (420) ;
la fourniture, par une partie des multiples appareils radiofréquence (412), de la couverture sans fil qui couvre la grappe de terminaux (420) et qui est de la cellule logique (413), la partie des appareils radiofréquence (412) étant désignée comme un groupe d'appareils radiofréquence ;
le changement dynamique, par l'appareil de bande de base (411), de la composition du groupe d'appareils radiofréquence, de sorte qu'une position de la couverture sans fil fournie de la cellule logique (413) change de manière dynamique lorsque la grappe de terminaux (412) se déplace linéairement, de sorte que la cellule logique reste inchangée pour la grappe de terminaux (420) dans le processus de déplacement linéaire ;
lorsque la grappe de terminaux (420) se déplace vers une zone de couverture d'un appareil radiofréquence respectif parmi les multiples appareils radiofréquence (412), l'envoi, par l'appareil radiofréquence respectif, des données de liaison montante de la grappe de terminaux (420) à l'appareil de bande de base (411), de telle sorte que l'appareil de bande de base (411) traite, à l'aide d'une ressource de bande de base de la cellule logique (413), les données de liaison montante qui sont de la grappe de terminaux (420) et envoyées par l'appareil radiofréquence respectif ; ou la réception par l'appareil radiofréquence respectif lorsque la grappe de terminaux (420) se déplace vers la zone de couverture de l'appareil radiofréquence respectif, des données de liaison descendante qui sont pour la grappe de terminaux (420) et obtenues par réalisation d'un traitement par l'appareil de bande de base (411) à l'aide d'une ressource de bande de base de la cellule (413), et l'envoi des données de liaison descendante à la grappe de terminaux (420).
